# EUROPEAN PATENT APPLICATION

(11) **EP 4 729 497 A1**
(43) Date of publication of application: **22.04.2026**
(21) Application number: 25208614.5
(22) Date of filing: 14.10.2025
(51) Int. Cl.: C04B 28/14, C04B 28/00, C04B 33/132, C04B 35/622

(54) **RECYCLED DRYWALL WASTE COMPOSITION**

(30) Priority: 15.10.2024 BE 202405690
(71) Applicant: Jansen Prefab NV, 3670 Oudsbergen (BE)
(72) Inventor: JANSEN, Nadia, 3670 Oudsbergen (BE)
(74) Representative: Brantsandpatents bv

(57) **Abstract**

The current invention relates to a composition suitable for producing a ceramic object wherein said composition comprises drywall waste, clay, at least one polymeric dispersion and water.

## Description

### FIELD OF THE INVENTION

The field of the invention relates to recycled materials, particularly to a composition suitable for ceramics. The invention specifically pertains to a composition comprising drywall waste, clay, and water, where the drywall waste includes cellulose. The invention also covers methods for producing ceramic objects using this composition, including the steps of processing the drywall waste and forming the ceramic objects. This invention is applicable in the field of ceramics manufacturing, offering an environmentally friendly solution for reusing drywall waste.

### BACKGROUND

Waste from building construction and demolition (C&D) is a growing problem. Industry studies show recycling C&D waste provides environmental and economic benefits. However, challenges remain for recycling some C&D waste materials, especially when recycled wastes have limited use and low value.

Gypsum drywall (known as drywall or plasterboard) is widely used for residential and commercial interiors. Drywall is fire-resistant, inexpensive, and relatively easy to install. Drywall panels have a gypsum (CaSO₄·2H₂O) core, sandwiched between paper facing and backing layers, modified with various admixtures. Such drywall panels to be installed in residential and commercial interiors are often mounted onto existing stud structures with conventional fasteners such as nails or drywall screws. Abutting panels often have an uneven seam which is sealed with a filler (i.e., a joint compound) which dries and hardens. The hardened joint compound is often sanded to create a smooth wall surface which completes the drywall process. Joint compounds can be of a setting formulation, i.e., a powder which often requires the addition of water prior to application so as to react chemically for hardening within a given time frame, or a drying formulation, i.e., a compound formulated as a ready-mixed joint compound that dries by contact with air as a result of evaporation of water. Such installation methods minimize joints between panels to reduce finishing costs, but produce significant waste: typically, 10-12% of installed material. Building demolition generates more than three times the volume of drywall waste from construction.

This waste poses environmental and economic challenges as it occupies landfill space and incurs disposal costs. Under landfill conditions, Sulphur-reducing bacteria metabolize drywall waste and produce hydrogen sulphide gas (H₂S). Trace amounts of H₂S result in offensive 'rotten-egg' odours, and higher concentrations impact human health. To mitigate this, the diversion of drywall waste from landfills through expanded recycling has been proposed.

Recycled construction drywall waste has limited applications because the gypsum is hydrated and cannot be rehardened. Additionally, there are inconsistencies between batches and concerns about contamination. Therefore, conventional methods of recycling drywall waste are limited and often inefficient, leading to a substantial amount of this material being discarded rather than repurposed. The presence of both cellulose and gypsum in the waste complicates the recycling process, as these components require different handling and processing techniques. Accordingly, there is a need to find beneficial alternatives for the recovered drywall waste materials/products.

Furthermore, there is a need for sustainable materials in ceramics manufacturing, but current solutions do not effectively utilize drywall waste, thus missing an opportunity to reduce environmental impact and enhance resource efficiency.

GB2434365, JP2011190161, US11780774 and US6295794B1 disclose the use of gypsum from drywall boards for the manufacturing of building products. However, gypsum alone or combined with clay only is not suitable for air-dryed ceramic objects due to the dust falloff. The current invention aims to overcome at least this drawback.

### SUMMARY OF THE INVENTION

The invention relates to a composition suitable for manufacturing ceramics that comprises drywall waste, clay, water and polymeric dispersion according to claim 1.

Further specific embodiments of the composition are described in claims 2 to 9.

The invention also relates to the use of the composition for producing ceramic objects according to claim 10.

The invention also discloses a method for producing a ceramic object using this composition, which involves providing and processing drywall waste, mixing it with clay, water, and polymeric dispersion and forming a ceramic object according to claim 11.

Finally, the invention relates to ceramic objects produced using the method disclosed herein, such as pots, vases, candle holders, and decorative profiles, as outlined in claim 15. These objects benefit from the unique composition, which includes recycled drywall waste, providing enhanced workability and durability.

The advantages of this invention include significant reduction in construction waste, conservation of natural resources, improved processability, and enhanced mechanical properties and durability of the final ceramic products. The method is efficient and cost-effective, simplifying the recycling process and enhancing the quality of the composition.

### DESCRIPTION OF FIGURES

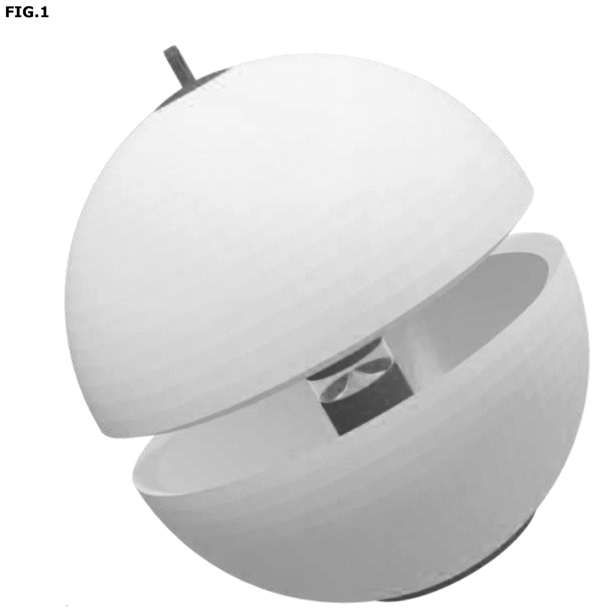

**FIG. 1** shows a candle holder obtained from the composition disclosed herein according to an embodiment of the invention.

### DETAILED DESCRIPTION OF THE INVENTION

As used herein, the following terms have the following meanings:

"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation.

Whereas the terms "one or more" or "at least one", such as one or more or at least one member(s) of a group of members, is clear per se, by means of further exemplification, the term encompasses inter alia a reference to any one of said members, or to any two or more of said members, such as, e.g., any ≥3, ≥4, ≥5, ≥6 or ≥7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

The term "drywall", which is synonymous with "wallboard", "sheetrock", "building board", "plasterboard" or "gypsum board" as used herein, refer to a prefabricated walling material which is of sandwich construction, often of which includes a hardened gypsum-based core or slab sandwiched between fibrous material, e.g., paper, facings or cover sheets. The primary gypsum material that can be incorporated herein so as to be used for making "drywall", "wallboard", "sheetrock", "building board", "plasterboard" or "gypsum board" and the gypsum can be either natural (i.e., "mined") gypsum or synthetic gypsum, i.e., produced from the flue gas desulfurization process at coal-burning power plants.

Moreover, as used herein, gypsum is generally thought of as a soft sulfate mineral composed of calcium sulfate dehydrate. More specifically, gypsum includes sulfate minerals and a calcium sulfate hydrate (often 79% calcium sulfate and 21% water), CaSO₄H₂O. The composition of a typical gypsum-based drywall is about 75-95% gypsum, 3-9% paper, 1% fiberglass, 0.3-1% starch and the remainder, a combination of organic binders, adhesives, dispersants, and water-resistant additives. Such a composition as a recycled material can be utilized in the disclosed embodiments herein. Additional waste products incorporated into the embodiments herein can also include mechanical fasteners and minimal contamination-like materials from paint and other wall covering as part of commercial and residential construction in using such gypsum-based drywall.

By the term " drywall waste" is meant in the present invention waste material derived from the demolition of wallboard or drywall structures. This waste comprises cellulose. Additional waste products incorporated into the embodiments herein may optionally also include mechanical fasteners and minimal contamination-like materials from paint and other wall covering as part of commercial and residential construction in using such gypsum-based drywall.

The term "clay" refers to natural earthy materials that are plastic when wet, consisting essentially of hydrous aluminum silicates. In the present invention, the clay can be selected from kaolin, illite, smectite, and/or chlorite.

The term "fine powder" refers to the finely ground material obtained from the grinding process of the drywall waste. This fine powder is used in the mixture to form the composition.

The invention as disclosed herein relates to the repurposing of drywall waste into a composition suitable for the production of ceramic objects.

In a first aspect, the invention as disclosed herein relates to a composition suitable for producing a ceramic object comprising drywall waste, clay and water. In some embodiments, the composition is suitable for producing and air-dried ceramic object.

The composition disclosed herein significantly reduces the volume of construction waste contributing to landfill overflow. This innovative approach to recycling construction materials not only mitigates the environmental impact of drywall disposal but also presents a sustainable alternative for the ceramics industry.

One of the significant advantages of this composition is its potential use in ceramics manufacturing. By incorporating drywall waste into the composition, the invention provides a sustainable and cost-effective raw material for producing ceramic objects.

In some embodiments the composition comprises drywall waste, clay, at least one polymeric dispersion and water. The addition of a polymeric dispersion enhances the strength and durability of the composition and prevents dust falloff from the ceramic object obtained from said composition.

The inclusion of a high percentage of drywall waste, preferably at least 45 w%, more preferably at least 50 w% provides a sustainable and eco-friendly solution by recycling materials that would otherwise contribute to landfill waste.

In embodiments, the composition disclosed herein comprises at least 30 w%, 35 w%, 40 w%, 45 w%, 50 w%, 55 w%, 60 w%, 65 w%, 70 w%, 75 w%, 80 w%, 85 w%, 90 w%, 91 w%, 92 w%, 93 w%, 94 w% or 95w% drywall waste.

Alternatively, the composition comprises between 45 w% and 95 w% drywall waste, between 50 w% and 90 w% drywall waste, between 55 w% and 85 w% drywall, between 60 w% and 80 w% drywall waste, between 65 w% and 75 w% drywall waste or between 60 w% and 70 w% drywall waste.

In yet another alternative embodiment, the composition comprises between 45 w% and 90 w%, between 45 w% and 85 w%, between 45 w% and 80 w%, between 45 w% and 75 w%, between 45 w% and 70 w%, between 45 w% and 65 w%, between 45 w% and 60 w%, between 45 w% and 55 w%, or between 50 w% and 55 w%.

In yet another alternative embodiment, the composition comprises between 50 w% and 95 w%, between 55 w% and 95 w%, between 60 w% and 95 w%, between 65 w% and 95 w%, between 70 w% and 95 w%, between 75 w% and 95 w%, between 80 w% and 95 w%, or between 85 w% and 95 w% drywall waste.

In embodiments of the composition disclosed herein, the drywall waste comprises a core material of gypsum. Gypsum is a well-known mineral, chemically referred to as calcium sulfate dihydrate (CaSO₄·2H₂O), that is widely used in the construction industry, particularly in the production of drywall or wallboard. Gypsum serves as the core material in most drywall compositions due to its excellent fire resistance, sound insulation properties, and workability. The composition disclosed herein effectively recycles gypsum from drywall waste, which typically cannot be repurposed in the construction industry because it is hydrated and cannot re-harden on its own. Despite this limitation, the gypsum from drywall waste possesses characteristics that are highly advantageous for the disclosed composition. For instance, its workability makes it easier to mix and mold into various shapes and forms during the manufacturing process. Furthermore, gypsum is known for its excellent fire-resistant properties due to the water molecules contained within its crystalline structure. These fire-resistant properties are retained in the ceramic products produced using the disclosed composition. Additionally, the gypsum core material is highly compatible with other additives, such as clay and cellulose, which are also present in the composition. This compatibility ensures that the final composition remains stable and homogeneous, without any adverse reactions between the components. The composition enables the use of gypsum without the need for burning to remove crystal water.

The drywall waste originating from demolition may comprise up to 20% cellulose. In some embodiments of the drywall waste originating from demolition comprises between 1 w% and 15 w% cellulose. This fraction contains between between 8 w% and 15 w%, between 10 w% and 15 w%, or between 12 w% and 15 w% cellulose. The cellulose is facer and backer paper of the drywall waste.

In some embodiment of the composition, as disclosed herein, the drywall waste used in said composition comprises a final cellulose content of between 1 w% and 20 w%. In some embodiments of the composition, as disclosed herein, the drywall waste in said composition comprises up to 20 w%, 15 w%, 10 w%, 5 w%, 2.5 w%, 2 w%, 1.5 w% or 1 w% cellulose. The cellulose in the drywall waste of the composition is facer and backer paper of the drywall waste.

Alternatively, the drywall waste used in said composition comprises a final cellulose content of between 1 w% and 20 w%, 1 w% and 15 w%, 1 w% and 10 w%, 1 w% and 7.5 w%, or 1 w% and 5 w%, such as 1 w%, 2 w%, 3 w%, 4 w% or 5 w%.

In yet another alternative embodiment, the drywall waste comprises between 5 w% and 20 w%, between 7.5 w% and 20 w%, between 10 w% and 20 w%, between 15 w% and 20 w% or between 17.5 w% and 20 w% cellulose.

In some embodiments of the composition, as disclosed herein, part of the cellulose of the drywall waste is removed. Preferably, about 80% of the cellulose from the drywall waste is removed. In some embodiments, about 80%, 81%, 82%, 83%, 84%, 85%, 86%, 87%, 88%, 89% or 90% of the cellulose of the drywall waste is removed. The removal of some of the cellulose from the drywall waste ensures that the composition maintains a consistent quality and performance. When cellulose is removed, the final cellulose concentration in the drywall waste is between 1 w% and 5 w%, preferably around 3 w% cellulose.

In embodiments, the drywall waste is processed to ensure that about 80% of facer and backer paper is removed. This may involve advanced separation techniques that are capable of distinguishing and removing these paper components effectively. The resulting gypsum is thus more suitable for applications where material quality is paramount, such as in ceramics manufacturing. The reduction of facer and backer paper content in the drywall waste is preferred as it eliminates potential contaminants that could otherwise compromise the integrity and performance of the recycled material.

In other embodiments of the composition, the cellulose from the drywall is not removed or partially removed. Inclusion of the cellulose from the drywall in the composition maximizes waste recycling and reduces production cost. When cellulose is not removed or partially removed, the final cellulose concentration in the drywall waste is between 5 w% and 20 w%, preferably around 15 w% cellulose.

The composition of the invention allows for a considerable amount of cellulose to be present in the final ceramic product, without diminishing the quality of the product. This approach further enhances the sustainability of the composition by utilizing all components of the demolition waste and simplifies the recycling process by eliminating the need of a perfect separation of the paper from the gypsum core. This reduction in processing steps not only saves time but also decreases the overall cost of recycling drywall waste. Additionally, the presence of cellulose from the facer and backer paper can enhance the binding properties of the composition, making it more suitable for various applications such as ceramics manufacturing.

In a further embodiment of the composition, as disclosed herein, the composition comprises at least 5 w% clay. In some embodiments, the composition comprises at least 5w%, 7.5 w%, 10 w%, 12 w%, 15 w%, 20 w%, 25 w%, 30 w%, 35w%, 40 w%, 45 w% or 50 w% clay.

Alternatively, the composition comprises between 5 w% and 50 w% clay, between 10 w% and 45 w% clay, between 15 w% and 40 w% clay, between 20 w% and 35 w% clay, or between 25 w% and 30 w% clay.

In yet another alternative embodiment, the composition comprises between 5 w% and 45 w%, between 5 w% and 40 w%, between 5 w% and 35 w%, between 5 w% and 30 w%, between 5 w% and 25 w%, between 5 w% and 20 w%, between 5 w% and 15 w% clay, or between 5 w% and 10 w% clay.

In yet another alternative embodiment, the composition comprises between 10 w% and 50 w%, between 15 w% and 50 w%, between 20 w% and 50 w%, between 25 w% and 50 w%, between 30 w% and 50 w%, between 35 w% and 50 w%, between 40 w% and 50 w%, or between 45 w% and 50 w% clay.

Overall, the preferred embodiment of the composition with the specified clay content provides significant benefits in terms of ease of use, versatility, and quality of the resulting ceramic objects. The inclusion of clay in the composition is advantageous because it imparts plasticity to the mixture, which is crucial for forming ceramic objects. The clay enhances the binding properties and workability, the durability and the wear resistance of the recycled drywall.

In embodiments of the composition disclosed herein, the clay is selected from kaolin, illite, smectite and/or chlorite. The mechanical properties that may be improved by the inclusion of these clays include, but are not limited to, increased strength, improved thermal stability, and enhanced resistance to cracking and deformation. These improvements are particularly beneficial in ceramic manufacturing, where the integrity and performance of the material are critical.

The selection of specific types of clay can be tailored to achieve the desired properties in the final ceramic product. For instance, kaolin clay, predominantly used in china, may be preferred for its fine particle size, white colour, high melting point and, which can contribute to forming high-quality ceramic objects. However, kaolin has relatively low plasticity, so it is often blended with more plastic clay.

Smectite, such as montmorillonite, the main mineral in bentonite, may be preferred for its high plasticity, strong binding properties and swelling properties, which improve the workability of the composition.

Illitebentonit, is valued for its plasticity and dry strength.

Chlorite, on the other hand, can provide additional thermal stability and resistance to chemical attack.

In embodiments, the clay may be bentonite or a non-bentonite clay. Bentonite, which is rich in smectite minerals such as montmorillonite, imparts on the composition an improved plasticity, binding strength, and workability. Its fine particle size and swelling capacity facilitate homogeneous mixing of the drywall waste, and water, while enhancing cohesion and green body strength prior to drying. The use of bentonite can therefore contribute to improved shaping and forming characteristics of the composition and may reduce cracking during drying.

In some embodiments of the composition, a single type of clay is used. In other embodiments, two or more types of clays are used such as 2, 3, 4, or 5 types of clays are used. When a single clay type is used, the resulting properties largely reflect the characteristics of that clay. When two or more types of clays are combined, synergistic effects may be achieved and the properties of the composition can be tailored to a preferred consistency, workability or strength.

In an embodiment of the composition as disclosed herein, said composition comprises between 2 w% and 5 w % water.

Water is another crucial component of the composition, with its content ranging from 2 w% to 5 w%, from 2 w% to 4.8 w%, from 2 w% to 4.6 w%, from 2 w% to 4.5 w%, from 2 w% to 4.2 w%, from 2 w% to 4 w%, from 2 w% to 3.6 w%, from 2 w% to 3.5 w%, or from 2 w% to 3.2 w%. Alternatively, the composition comprises between 2 w% and 5 w%, between 2.5 w% and 5 w%, 3 w% and 5 w% water, between 3.5 w% and 5 w%, or between 4 w% and 5 w% water.

The presence of water aids in the mixing and binding of the various components, ensuring a homogeneous and stable final product. The water also ensures the proper consistency and workability of the composition, making it suitable for various applications, including ceramics manufacturing.

In an embodiment, the composition comprises calcium hydrate (Ca(OH)₂) and/or calcium phosphate (Ca₃(PO₄)₂). The gypsum in the composition provides moderate strength but is brittle, sensitive to water, and has limited long-term stability in humid environments. Calcium hydrate reacts slowly with atmospheric CO₂ to form calcium carbonate (CaCO₃), which increases surface hardness and durability over time. In the composition disclosed herein, the claicum hydrate improves bonding between gypsum and clay, creats a slightly alkaline environment that stabilizes cellulose and polymer dispersions and fills microvoids, reducing porosity and improving water resistance. Calcium phosphate forms insoluble calcium phosphate salts in situ, which reinforce the matrix by acting as a micro-filler and binder. Calcium phosphate thus contributes to the dimensional stability of the composition and reduced solubility of the gypsum-based matrix in humid conditions. Calcium hydrate and calcium phosphate may be added together to the composition, providing a synergistic effect, or only one may be added.

In an embodiment of the composition, as disclosed herein, said composition comprises between 2% and 6% the calcium hydrate. In embodiments the composition comprises between 2% and 6%, 2% and 5%, 2% and 4%, or 2% and 3% calcium hydrate. In alternative embodiments, the composition comprises between 3% and 6%, 4% and 6%, or 5% and 6% calcium hydrate.

In an embodiment of the composition, as disclosed herein, said composition comprises between 2% and 6% the calcium phosphate. In embodiments the composition comprises between 2% and 6%, 2% and 5%, 2% and 4%, or 2% and 3% calcium phosphate. In alternative embodiments, the composition comprises between 3% and 6%, 4% and 6%, or 5% and 6% calcium phosphate.

In an embodiment of the composition, as disclosed herein, said composition comprises between 0.5 w% and 4 w% of a polymeric dispersion. In some embodiments, the composition comprises between 0.5 w% and 3.75 w%, between 0.5 w% and 3.5 w%, between 0.5 w% and 3.25 w%, between 0.5 w% and 3 w%, between 0.5 w% and 2.75 w%, between 0.5 w% and 2.5 w%, between 0.5 w% and 2.25 w%, between 0.5 w% and 2 w%, between 0.5 w% and 1.75 w%, between 0.5 w% and 1.5 %, between 0.5 w% and 1.25 w%, between 0.5 w% and 1 w%, between 0.5 w% and 1 w% or between 0.5 w% and 0.75 w% polymeric dispersion.

Alternatively, the composition comprises between 0.75 w% and 4 w%, between 1 w% and 4 w%, between 1.25 w% and 4 w%, between 1.5 w% and 4 w%, between 1.75 w% and 4 w%, between 2 w% and 4 w%, between 2.25 w% and 4 w%, between 2.5 w% and 4 w%, between 2.75 w% and 4 w%, between 3 w% and 4 w%, between 3.25 w% and 4 w%, between 3.5 w% and 4 w%, or between 3.75 w% and 4 w% polymeric dispesion.

In yet another alternative embodiment the composition comprises between 0.75 w% and 3.75 w%, between 1 w% and 3.5 w%, between 1.25 w% and 3.25 w%, between 1.5 w% and 3 w%, between 1.75 w% and 2.75 w%, or between 2 w% and 2.5 w% polymeric dispersion.

The ceramic objects formed using the composition disclosed herein are not fired but air-dried. In the absence of firing, the polymeric dispersion acts as a substitute to create a durable surface film that holds the drywall waste and clay together. The polymeric dispersion binds the particles together to prevent dusting or transfer of loose particles from the surface of the ceramic object formed from the composition. Without this binder, particles (especially from the drywall waste, like gypsum and cellulose) may not adhere well, leading to dust transfer during handling or use. This prevents wearing, flaking, or disintegration over time.

Additionally, in the absence of firing, the object is not subjected to vitrification where particles fuse and harden. The polymeric dispersion thus helps the object retain its shape and resists deformation after it dries, ensuring the object remains intact.

In a preferred embodiment of the composition as disclosed herein, the polymeric dispersion is a vinyl copolymer dispersion. However, it would be obvious to the skilled person that any film-forming polymer dispersions suitable for dust prevention may be used in the composition disclosed herein. Non-limiting examples include other vinyl copolymer dispersions, such as vinyl acetate-ethylene (VAE) dispersion or polyvinyl chloride (PVC) dispersion. Additionally, acrylic dispersions, such as polymethyl methacrylate (PMMA), or polyurethane dispersions may also be used. The combination of drywall waste, clay, polymeric dispersion and water in precise proportions results in a composition that not only meets but exceeds the performance characteristics of conventional ceramic materials.

In some embodiments, a single polymeric dispersion is used. In other embodiments, two or more polymeric dispersions are used such as 2, 3, 4 or 5.

In a second aspect, the invention relates to a drywall composition according to any of the previous embodiments for use in ceramics manufacturing.

The composition of the present invention offers a sustainable and economical solution for the ceramics industry by effectively utilizing drywall waste. The specific ranges and preferred amounts of the components ensure that the composition meets the required standards for producing high-quality ceramic objects while minimizing environmental impact and production costs.

The composition can be used to produce a wide range of ceramic items such as decorative objects, structural ceramics and/or tiles. Items such as tiles, large-format tiles, slabs, vases, pots, profiles, panels and candle holders can be produced using this composition. The cellulose fibres and the polymeric dispersion enhance the bond strength, allowing for intricate shaping and detailing in these decorative pieces. Due to the strength and fire-resistant properties of the composition, it can also be used to manufacture ceramic elements for construction purposes, such as bricks or profiles. In preferred embodiments, the composition is used for manufacturing profiles for modular walls. In some embodiments, the composition is particularly well-suited for producing ceramic tiles, where fire resistance, mechanical strength, and aesthetic properties are essential. The composition's workability allows for smooth, uniform tiles with fine details and designs.

In a third aspect, the invention relates to a method of producing a composition suited for making a ceramic object, wherein the method comprises:
- providing drywall waste wherein said drywall waste comprises facer and backer paper and a gypsum core;
- processing the drywall waste into a powder or paste having a particle size ranging from 10 µm to 100 µm;
- mixing at least 45 w% of the drywall waste powder or paste, between 5 w% and 50 w% clay and water.

In some embodiments of the method, as disclosed herein, the method comprises adding at least 0.5 w% polymeric dispersion in the mixing step (c).

The present invention provides a method of producing a composition suitable for manufacturing ceramics. This method significantly contributes to the conservation of natural resources by utilizing substantial amounts of recycled drywall waste. One of the core advantages of this method is its ability to recycle drywall waste effectively, thereby reducing the environmental impact associated with the disposal of such waste. The method ensures that a portion of the cellulose from the drywall waste, including the non-removed facer and backer paper, remains in the final composition. This approach maximizes the efficient utilization of the drywall waste by incorporating its components into the final product, reducing material waste and enhancing sustainability.

The method is used to produce a composition that is suitable for various ceramic objects, such as pots, vases, profiles, tiles, large format tiles, slabs, and candle holders.

The method of producing the composition involves providing drywall waste, which includes facer and backer paper and gypsum core. The drywall waste is processed into a powder or paste having a particle size ranging from 10 µm to 100 µm.

The processing of the drywall waste into a fine powder or paste may be performed by any means known in the art such as but not limited to grinding, mechanical shredding, pulverization, cryogenic freezing, wet milling or ultrasonic disintegration.

Grinding may be done using mechanical milling equipment, such as hammer mills, ball mills, or similar industrial grinding systems, designed to break down the demolition waste into a fine, workable powder.

Pulverization involves high-speed impacts to fracture the material into fine particles. This method is often faster and can handle larger volumes of material more efficiently than grinding.

Mechanical shredders can be used to shred the drywall waste into smaller pieces. The waste is passed through rotating blades, which tear the material apart. After shredding, additional steps like screening can ensure that the material reaches the desired particle size.

Cryogenic freezing involves the cooling down of the drywall waste to extremely low temperatures using liquid nitrogen or other cryogenic substances. The cooling makes the material brittle, and then it can be easily broken down into fine particles through crushing or milling.

Wet milling is a process in which the drywall waste is mixed with water or another liquid medium before being mechanically processed. This method helps reduce dust and heat buildup and can provide a smoother, finer end product.

Ultrasonic waves can be used to disintegrate the material into fine particles. This method is often used for delicate materials and may provide a more controlled particle size distribution.

In embodiments of the method as disclosed herein, the drywall waste are processed to achieve a particle size ranging from 10 µm to 100 µm. This particle size range is optimal for ensuring the desired properties of workability, homogeneity, and final mechanical strength in the ceramic products. In some embodiments, the particle size achieved is between 10 µm and 90 µm, between 10 µm and 80 µm, between 10 µm and 70 µm, between 10 µm and 60 µm, between 10 µm and 50 µm, between 10 µm and 40 µm, between 10 µm and 30 µm, or between 10 µm and 20 µm. Alternatively, the particle size achieved is between 20 µm and 100 µm, between 30 µm and 100 µm, between 40 µm and 100 µm, between 50 µm and 100 µm, between 60 µm and 100 µm, between 70 µm and 100 µm, between 80 µm and 100 µm, or between 90 µm and 100 µm. In yet another alternative embodiment, the particle size achieved is between 20 µm and 90 µm, between 30 µm and 80 µm, between 40 µm and 70 µm, or between 50 µm and 60 µm.

In some embodiments of the method as disclosed herein, the facer and backer paper of the drywall waste is retained and said the facer and backer paper is processed together with the gypsum core in a fined power or paste.

In other embodiments of the method disclosed herein, up to 80% of the facer and backer paper are removed before processing the gypsum core and the remaining cellulose of said drywall waste into a fine powder or paste.

In further embodiments of the method, as disclosed herein, the drywall waste is processed into pieces ranging from 1 to 10 cm in size prior to the facer and backer paper removal. The drywall waste is broken or shredded to expose the facer and backer paper from the gypsum core prior to the removal of the facer and backer paper. This further enhances the efficiency of the separation process and improves the quality of the recovered materials. Any suitable method known in the art may be used for breaking the drywall is smaller size pieces. Heavy-duty industrial shredders may be used to break the drywall into smaller chunks. This is usually the first step in preparing the material for further processing.

In some embodiments, the drywall is processed prior to the facer and backer paper removal in pieces ranging from 1 cm to 9 cm, 1 cm to 8 cm, 1 cm to 7 cm, 1 cm to 6 cm, 1 cm to 5 cm, 1 cm to 4 cm, 1 cm to 3 cm, or 1 cm to 2 cm. Alternatively, the drywall is processed prior to the facer and backer removal in pieces ranging from 2 cm to 10 cm, 3 cm to 10 cm, 4 cm to 10 cm, 5 cm to 10 cm, 6 cm to 10 cm, 7 cm to 10 cm, 8 cm to 10 cm, or 9 cm to 10 cm. In yet another alternative embodiment, the drywall is processed prior to the facer and backer removal in pieces ranging from 2 cm to 8 cm, from 3 cm to 7 cm, from 4 cm to 6 cm, or from 5 cm to 6 cm.

The removal of the facer and backer paper from the drywall is performed after processing the drywall in smaller pieces, using suitable methods known in the art. Mechanical processes involve shredding the drywall with high-capacity industrial shredders to produce smaller fragments, followed by air separation using classifiers that utilize airflow to lift and carry the lighter paper while heavier gypsum particles fall to the bottom. Alternatively, hammer mills can be employed to crush the drywall into finer fragments, with subsequent screening using vibrating screens to separate the paper from the gypsum. In wet processing, shredded drywall is mixed with water in pulping tanks to break down the paper, with floating techniques used to remove the less dense paper from the suspended gypsum. Hydrocyclones can also be used to leverage centrifugal forces to separate the paper from the gypsum. Chemical processes include acid or alkaline treatments to degrade the paper, or enzyme treatments that target cellulose in the paper, offering a more environmentally friendly approach. Combination methods integrate mechanical and wet or chemical processes, such as shredding followed by pulping or shredding combined with acid or enzyme treatment, to enhance the separation efficiency. Each of these methods offers distinct advantages and can be selected based on factors like cost, efficiency, and environmental impact.

The removal of the facer and backer paper effectively removes about 80% of the cellulose from the drywall waste. The final drywall waste fine powder or paste comprises thus up to 5 w% cellulose, preferably up to 3 w% cellulose. In some embodiments of the method, the drywall waste in said composition comprises up to 5 w%, 4.5 w%, 4 w%, 3.5 w%, 3 w%, 2.5 w%, 2 w%, 1.5 w% or 1 w% cellulose. Alternatively, in the embodiments where the facer and backer paper are retained, the drywall waste in the composition comprises up to 10 w%, 15 w% or 20 w% cellulose.

Despite the remaining cellulose in the composition, the quality of the resulting ceramic objects remains excellent. The presence of the cellulose does not compromise the material's performance; instead, it contributes to the composition's overall workability and mechanical strength. Additionally, the inclusion of some cellulose reduces the need for extensive processing, cutting down labour costs and complexity associated with the complete separation of the cellulose from the drywall waste. This simplifies the recycling process without degrading the quality of the final ceramic product, especially when the facer and backer paper of the drywall waste is maintained.

In a further embodiment of the method, as disclosed herein, at least 45 w% of the drywall waste powder or paste is mixed together with between 5 w% and 50 w% clay, a at least 0.5 w% polymeric dispersion and water, as disclosed in any of the previous embodiments. In other embodiments, the polymeric dispersion is not added.

In embodiments, at least 35 w%, 36 w%, 37 w%, 38 w%, 39 w%, 40 w%, 41 w%, 42 w%, 43 w%, 44 w%, 45 w%, 46 w%, 47 w%, 48 w%, 49 w%, 50 w%, 55 w%, 60 w%, 65 w%, 70 w%, 75 w%, 80 w%, 85 w% or 90 w% drywall waste is mixed with the clay, water and polymeric dispersion. In other embodiments, the polymeric dispersion is not added.

In a further embodiment of the method, the drywall waste powder or paste is further mixed with between 5 w% and 50 w% clay and further water and polymeric dispersion. In embodiments, the clay content is between 10 w% and 45 w% clay, between 15 w% and 40 w% clay, between 20 w% and 35 w% clay, or between 25 w% and 30 w% clay.

In some embodiments of the method, a single type of clay is used. In other embodiments, two or more types of clays are used such as 2, 3, 4, or 5 types of clays are used. The clay types are selected from: kaolin, illite, smectite, and/or chlorite. In some embodiments the smectite is bentonite. The combination of different clays can provide a balance of plasticity, strength, and other desirable properties, further enhancing the quality of the ceramic products.

The inclusion of bentonite in the composition is advantageous as it enhances the plasticity and ease of moulding, making the manufacturing process more efficient and yielding better-quality ceramic products. Moreover, the addition of bentonite contributes to the overall strength and durability of the ceramic objects. Bentonite's unique properties, such as its ability to swell and absorb water, help maintain the moisture content of the composition during the moulding process. This ensures that the composition remains workable for a longer period, reducing the risk of drying out prematurely and allowing for more time to perfect the shape and details of the ceramic object.

In embodiments of the method, as disclosed herein, water between 2 w% and 5 w% is added to the composition. Water is another crucial component of the composition, with its content ranging from 2 w% to 5 w%, from 2 w% to 4.5 w%, from 2 w% to 4 w%, from 2 w% to 3.5 w%, from 2 w% to 3 w%, or from 2 w% to 2.5 w%. Alternatively, the composition comprises between 2.5 w% and 5 w%, between 3 w% and 5 w%, 3.5 w% and 5 w% water, between 4 w% and 5 w%, or between 4.5 w% and 5 w% water.

In yet a further embodiment of the method as disclosed herein, at least one polymeric dispersion is added at between 0.5 w% and 4 w% to the composition. In some embodiments, the composition comprises between 0.5 w% and 3.75 w%, between 0.5 w% and 3.5 w%, between 0.5 w% and 3.25 w%, between 0.5 w% and 3 w%, between 0.5 w% and 2.75 w%, between 0.5 w% and 2.5 w%, between 0.5 w% and 2.25 w%, between 0.5 w% and 2 w%, between 0.5 w% and 1.75 w%, between 0.5 w% and 1.5 %, between 0.5 w% and 1.25 w%, between 0.5 w% and 1 w%, between 0.5 w% and 1 w% or between 0.5 w% and 0.75 w% polymeric dispersion polymeric dispersion.

In preferred embodiments of the method, the polymeric dispersion is a vinyl copolymer dispersion. However, other polymeric dispersions may also be used. In some embodiments, a single polymeric dispersion is used. In other embodiments, two or more polymeric dispersions are used, such as 2, 3, 4 or 5.

In some embodiments of the method, as disclosed herein, the ceramic object is air-dried. In some embodiments of the method, as disclosed herein, the ceramic object is allowed to dry at room temperature for at least 12 hours, 24 hours, 2 days, 3 days, 4 days, preferably 5 days, more preferably 6 days, or even more preferably 7 days. The presence of the drywall waste and cellulose fibres, in combination with the polymeric dispersion, promotes green-strength development as water evaporates, with the dispersion forming a binding film that enhances interparticle adhesion and dimensional and, eliminating the need for firing. Eliminating the firing step reduces energy consumption and CO₂ emissions, and shortens production time and cost.

The composition obtained using the method disclosed herein allows for the production of various ceramic objects, such as pots, vases, candles, tiles, large format tiles, slabs, and profiles. This versatility in the types of ceramic objects that can be produced highlights the adaptability and broad application scope of the method. The composition enables the use of gypsum without the need for burning to remove crystal water.

In a final aspect, the invention relates to a ceramic object obtained according to the method disclosed herein. Objects such as pots, vases, candle holders, tiles, large format tiles, slabs, and decorative profiles are produced using a composition that includes a high proportion of recycled drywall waste that comprises cellulose. The presence of cellulose enhances workability, making it easier to mold the composition into intricate shapes. Meanwhile, the polymeric dispersion ensures strong binding and prevents dust transfer from the surface of the object while waterproofing the objects at the same time. The gypsum in the composition contributes to thermal stability and fire resistance, further enhancing the object's strength and heat tolerance. Moreover, this method reduces production costs by eliminating the need for complete paper removal, resulting in a more economical and sustainable manufacturing process.

In some embodiments of the ceramic object disclosed herein, the ceramic object is manufactured from a composition comprising drywall waste, clay, and water. In further or alternative embodiments, the ceramic objects are made from a composition where no cellulose is removed from the drywall waste. In yet other alternative embodiments, the ceramic objects are made from a composition where up to 80% of the cellulose is removed from the drywall waste. Ceramic objects made from such a composition, without any waterproofing treatment, are particularly suitable for applications where biodegradability or environmental impact is a priority. Examples of such objects include ash urns designed for eco-friendly cremation practices, as well as biodegradable plant pots intended for direct planting, where the material naturally breaks down and enriches the soil. These objects offer an environmentally conscious alternative to conventional ceramics, combining functionality with ecological responsibility.

In an embodiment, the ceramic object, as disclosed herein, is formed using the composition and method of any of the previous embodiments. After shaping, the ceramic object is allowed to dry at room temperature for at least 3 days, 4 days, preferably 5 days, more preferably 6 days, or even more preferably 7 days. This gradual air-drying process enables the composition to harden uniformly, ensuring optimal durability and structural integrity without the need for firing. The polymeric dispersion and retained cellulose in the drywall waste provide sufficient binding and cohesion, allowing the object to achieve long-lasting stability through simple drying. This process not only simplifies production but also reduces energy consumption, making it a more environmentally sustainable alternative to traditional ceramic manufacturing methods that require high-temperature firing.

It is supposed that the present invention is not restricted to any form of realization described previously and that some modifications can be added to the presented example of fabrication without reappraisal of the appended claims.

### EXAMPLES

The present invention will now be further exemplified with reference to the following examples.

### Example 1. Composition for ceramics

A composition was prepared using 48 w% drywall waste, 48 w% clay, 2.8 w% water and 1.6% vinyl copolymers dispersion (Table 1). The drywall waste was processed to remove cellulose and about 3 w% cellulose was left in the drywall fine dust after further processing in a small fraction.

Candle holders, as shown in Figure 1 were formed from the composition. The composition demonstrated enhanced material properties, including improved mechanical strength and processability, making it suitable for use in ceramics manufacturing. The ceramic objects show no dusting or transfer of loose particles from the surface of the ceramic object.

**Table 1. Composition for ceramics**

| Component | Quantity |
|---|---|
| Drywall waste | 20 kg |
| Clay | 20 kg |
| Water | 1.17 L |
| Vinyl copolymers dispersion | 0.64 L |

### Example 2. Preparation of the drywall fine powder

The process begins with the collection of recycled drywall waste, which includes the gypsum core, facer, and backer paper. The drywall is first broken down into smaller pieces ranging from 1 cm to 5 cm in size using heavy-duty industrial shredders. This size reduction exposes the facer and backer paper, enhancing the efficiency of subsequent separation processes.

Once the drywall waste is reduced to smaller fragments, it is fed into a maze-like separation system equipped with openings of 1 mm. This design utilises mechanical agitation and airflow to facilitate the separation of cellulose from the gypsum core. As the fragments travel through the maze, the lightweight paper components are carried away by the airflow, while the heavier gypsum particles pass through the openings and fall to the bottom of the system.

The airflow assists in removing approximately 80% of the cellulose from the drywall waste, leaving behind the drywall comprising gypsum and up to 3 w% cellulose. The drywall comprising gypsum and up to 3 w% cellulose is collected for further processing.

To achieve the desired particle size, the drywall comprising gypsum and up to 3 w% cellulose undergoes additional milling using mechanical equipment such as hammer mills or ball mills. This step ensures a uniform consistency suitable for the ceramic composition.

The present invention is in no way limited to the embodiments described in the examples and/or shown in the figures. On the contrary, methods according to the present invention may be realised in many different ways without departing from the scope of the invention.

## Claims

1. A composition suitable for producing a ceramic object wherein said composition comprises drywall waste, clay, at least one polymeric dispersion and water.

2. The composition according to claim 1, wherein the polymeric dispersion is a vinyl copolymer dispersion.

3. The composition according to any of the claims 1 or 2, wherein the composition comprises at least 45 w% drywall waste, preferably at least 50 w% drywall waste.

4. The composition according to any of the claims 1 to 3, wherein the drywall waste comprises a core material of gypsum.

5. The composition according to any of the claims 1 to 4, wherein the drywall waste comprises cellulose, preferably non-removed facer and backer paper of the drywall waste.

6. The composition according to claim 5, wherein the drywall waste comprises between 1 w% and 20 w% cellulose.

7. The composition according to any of the claims 1 to 6, wherein the composition comprises between 5 w% and 50 w% clay, wherein the clay is selected from kaolin, illite, smectite and/or chlorite.

8. The composition according to any of the claims 1 to 7, wherein the composition comprises between 0.5 w% and 4 w% of a polymeric dispersion.

9. The composition according to any of the claims 1 to 8, wherein the composition comprises calcium hydrate and/or calcium phosphate.

10. Use of a composition according to any of the claims 1 to 9 for ceramics manufacturing.

11. A method of producing a composition suited for making a ceramic object, wherein the method comprises:
(a) providing drywall waste wherein said drywall waste comprises facer and backer paper and a gypsum core;
(b) processing the drywall waste into a powder or paste having a particle size ranging from 10 µm to 100 µm;
(c) mixing at least 45 w% of the drywall waste powder or paste, between 5 w% and 50 w% of clay, at least 0.5 w% polymeric dispersion and water.

12. The method of claim 11, wherein prior to step (b), up to 80% of the facer
and backer paper of the drywall waste is removed.

13. The method according to claim 12, wherein prior to the facer and backer paper, the drywall waste is processed into pieces ranging from 1 to 10 cm.

14. The method according to any of the claims 11 to 13, wherein the ceramic object is air-dried.

15. A ceramic object obtained from a composition according to claims 1 to 9.
